# EUROPEAN PATENT APPLICATION

(11) **EP 4 793 604 A1**
(43) Date of publication of application: **19.08.2026**
(21) Application number: 25222257.5
(22) Date of filing: 10.12.2025
(51) Int. Cl.: G01F 1/667, G01F 25/10, G01F 1/66

(54) **APPARATUS FOR MONITORING FLUID FLOW**

(30) Priority: 12.02.2025 US 202519051569
(71) Applicant: General Electric Company, Cincinnati, Ohio 45215 (US)
(72) Inventor: ANDARAWIS, Emad Andarawis, Niskayuna, 12309 (US); LEIGHTON, David, West Chester, 45069 (US); WALLACE, Kirk Dennis, Niskayuna, 12309 (US); MCGUIGAN, Samantha Marie, Niskayuna, 12309 (US); REEPMEYER, James Ryan, Evendale, 45215 (US); BELLOFATTO, Dominick, Evendale, 45215 (US)
(74) Representative: Openshaw & Co.

(57) **Abstract**

A apparatus for monitoring fluid flow includes an upstream sensor assembly having a first transceiver-based sensor and a second transceiver-based sensor. Furthermore, the apparatus includes a downstream sensor assembly having a third transceiver-based sensor and a fourth transceiver-based sensor. In this respect, the first transceiver-based sensor and the second transceiver-based sensor are oriented relative to the third transceiver-based sensor and the fourth transceiver-based sensor such that the third transceiver-based sensor and the fourth transceiver-based sensor receive a first sensor signal emitted by the first transceiver-based sensor and a second sensor signal emitted by the second transceiver-based sensor.

## Description

### FEDERALLY SPONSORED RESEARCH

This invention was made with government support under contract number FA8626-16-C-2138 awarded by the Department of Defense. The U.S. government may have certain rights in the invention.

### FIELD

The present disclosure is related to monitoring fluid flow and, more specifically, to systems for monitoring fluid flow, such as in connection with the operation of a gas turbine engine, and associated methods.

### BACKGROUND

It is generally necessary to monitor or otherwise measure the flow rates of fluids in certain systems to control and/or ensure the proper functioning of such systems. For example, it is important to accurately monitor the flow rate of fuel being delivered to a gas turbine engine to properly control the engine. In this respect, many fuel flow monitoring systems rely on transceiver-based sensors (e.g., ultrasonic sensors) due to their accuracy and non-obtrusive operation.

In certain applications, such as those in the aviation and aerospace fields, it is important to build redundancies into the fluid flow monitoring systems being used. For example, in a fuel flow monitoring apparatus for a gas turbine engine used on an aircraft, two sets of transceiver-based sensors may be used to monitor the same fuel flow to provide the desired redundancy. However, the inherent operational characteristics of transceiver-based sensors create certain challenges when using several transceiver-based sensors close to each other.

### BRIEF DESCRIPTION OF THE DRAWINGS

A full and enabling disclosure of the present disclosure, including the best mode thereof, directed to one of ordinary skill in the art, is set forth in the specification, which refers to the appended figures, in which:
FIG. 1 is a schematic cross-sectional view of one embodiment of a gas turbine engine in accordance with aspects of the present disclosure.
FIG. 2 is a diagrammatic view of one embodiment of a apparatus for monitoring fluid flow in accordance with aspects of the present disclosure.
FIG. 3 is a simplified diagrammatic view of the apparatus shown in FIG. 2, particularly illustrating one arrangement of a first transceiver-based sensor, a second transceiver-based sensor, a third transceiver-based sensor, and a fourth transceiver-based sensor.
FIG. 4 is a simplified diagrammatic view of the apparatus shown in FIG. 2, particularly illustrating another arrangement of the first transceiver-based sensor, the second transceiver-based sensor, the third transceiver-based sensor, and the fourth transceiver-based sensor.
FIG. 5 is a simplified diagrammatic view of the apparatus shown in FIG. 2, particularly illustrating a further arrangement of the first transceiver-based sensor, the second transceiver-based sensor, the third transceiver-based sensor, and the fourth transceiver-based sensor.
FIG. 6 is a simplified diagrammatic view of the apparatus shown in FIG. 2, particularly illustrating yet another arrangement of the first transceiver-based sensor, the second transceiver-based sensor, the third transceiver-based sensor, and the fourth transceiver-based sensor.
FIG. 7 is a diagrammatic view of another embodiment of a apparatus for monitoring fluid flow in accordance with aspects of the present disclosure.
FIG. 8 is a flow diagram illustrating one embodiment of control logic for monitoring fluid flow in accordance with aspects of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context dictates otherwise.

The term "at least one of" in the context of, e.g., "at least one of A, B, and C" refers to only A, only B, only C, or any combination of A, B, and C.

The terms "coupled," "fixed," "attached to," and the like refer to both direct coupling, fixing, or attaching, as well as indirect coupling, fixing, or attaching through one or more intermediate components or features unless otherwise specified herein.

As used herein, the terms "first," "second," and "third" may be used interchangeably to distinguish one component from another and are not intended to signify the location or importance of the individual components.

For purposes of the description hereinafter, the terms "upper," "lower," "right," "left," "vertical," "horizontal," "top," "bottom," "lateral," "longitudinal," and derivatives thereof shall relate to the embodiments as they are oriented in the drawing figures. However, it is to be understood that the embodiments may assume various alternative variations, except where expressly specified to the contrary. It is also to be understood that the specific devices illustrated in the attached drawings, and described in the following specification, are simply exemplary embodiments of the disclosure. Hence, specific dimensions and other physical characteristics related to the embodiments disclosed herein are not to be considered limiting.

The term "turbomachine" refers to a machine including one or more compressors, a heat-generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

The term "combustion section" refers to any heat addition apparatus for a turbomachine. For example, the term combustion section may refer to a section including one or more of a deflagrative combustion assembly, a rotating detonation combustion assembly, a pulse detonation combustion assembly, or another appropriate heat addition assembly. In certain example embodiments, the combustion section may include an annular combustor, a can combustor, a cannular combustor, a trapped vortex combustor (TVC), or other appropriate combustion system, or combinations thereof.

The terms "low" and "high", or their respective comparative degrees (e.g., -er, where applicable), when used with a compressor, a turbine, a shaft, or spool components, etc. each refer to relative speeds within an engine unless otherwise specified. For example, a "low turbine" or "low-speed turbine" defines a component configured to operate at a rotational speed, such as a maximum allowable rotational speed, lower than a "high turbine" or "high-speed turbine" of the engine.

The terms "forward" and "aft" refer to relative positions within a gas turbine engine or vehicle, and are based on a normal operational attitude of the gas turbine engine or vehicle. More particularly, forward and aft are used herein with reference to the direction of travel of the vehicle and the direction of propulsive thrust of the gas turbine engine.

The terms "upstream" and "downstream" refer to the relative direction with respect to fluid flow in a fluid pathway. For example, "upstream" refers to the direction from which the fluid flows, and "downstream" refers to the direction in which the fluid flows.

As used herein, the terms "axial" and "axially" refer to directions and orientations that extend substantially parallel to a centerline of the gas turbine engine. Moreover, the terms "radial" and "radially" refer to directions and orientations that extend substantially perpendicular to the centerline of the gas turbine engine. In addition, as used herein, the terms "circumferential" and "circumferentially" refer to directions and orientations that extend arcuately about the centerline of the gas turbine engine.

In general, the present subject is directed to a apparatus for monitoring a fluid flow, such as a fuel flow being delivered to a gas turbine engine. As will be described below, the apparatus includes a fluid conduit defining a flow passage through which a fluid flows. For example, in some embodiments, the fluid conduit may be a fuel conduit or line (e.g., of a gas turbine engine) through which fuel flows. Furthermore, the apparatus includes an upstream sensor assembly and a downstream sensor assembly associated with (e.g., positioned within) the fluid conduit. More specifically, the upstream sensor assembly includes first and second transceiver-based sensors (e.g., first and second ultrasonic sensors). Moreover, the downstream sensor assembly includes third and fourth transceiver-based sensors (e.g., third and fourth ultrasonic sensors).

In several embodiments, the first and second transceiver-based sensors are oriented relative to the third and fourth transceiver-based sensors such that the third and fourth transceiver-based sensors receive a first sensor signal emitted by the first transceiver-based sensor and a second sensor signal emitted by the second transceiver-based sensor. Similarly, the first and second transceiver-based sensors may be oriented relative to the third and fourth transceiver-based sensors such that the first and second transceiver-based sensors receive a third sensor signal emitted by the third transceiver-based sensor and a fourth sensor signal emitted by the fourth transceiver-based sensor.

In other embodiments, the first and second transceiver-based sensors are concentric and the third and fourth transceiver-based sensors are concentric. In such embodiments, the sensor signal emitted by the outer one of the first and second transceiver-based sensors is directed at the inner one of the third and fourth transceiver-based sensors. Similarly, the sensor signal emitted by the inner one of the first and second transceiver-based sensors is directed at the outer one of the third and fourth transceiver-based sensors.

The arrangements of the first, second, third, and fourth transceiver-based sensors described above improve the operation of the gas turbine engine. More specifically, in certain applications (e.g., aviation and aerospace applications), it is necessary to have redundant fluid flow sensors. For example, the first and third transceiver-based sensors may operate together to capture data for determining one flow measurement. Similarly, the second and fourth transceiver-based sensors may operate together to capture data for determining another flow measurement (e.g., a redundant flow measurement). However, the flow conditions within the fluid conduit may not be uniform throughout the flow passage. For example, bends or curves in the fluid conduit may result in one pair of transceiver-based sensors capturing data indicative of one flow condition and the other pair of transceiver-based sensors capturing data indicative of a different flow condition. As described above, in several embodiments of the disclosed apparatus, the third and fourth transceiver-based sensors both receive the first and second sensor signals emitted by the first and second transceiver-based sensors. Likewise, in such embodiments, the first and second transceiver-based sensors both receive the third and fourth sensor signals emitted by the third and fourth transceiver-based sensors. Moreover, as described above, in other embodiments, the first and second transceiver-based sensors are concentric and the third and fourth transceiver-based sensors are concentric. These arrangements ensure that the first, second, third, and fourth sensor signals all experience the same flow conditions. In this respect, variations in the redundant flow condition measurements are caused by variations in the sensors themselves and not the flow conditions. Thus, the disclosed apparatus can more accurately determine when variations in the operation of redundant transceiver-based sensors used for fluid flow monitoring occur than conventional systems.

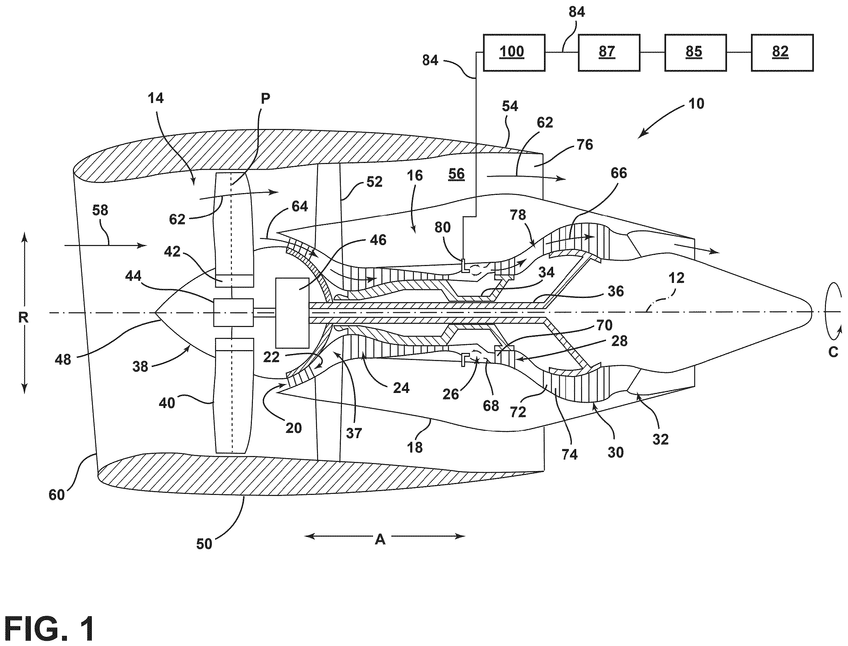

Referring now to the drawings, wherein identical numerals indicate the same elements throughout the figures, FIG. 1 is a schematic cross-sectional view of one embodiment of a gas turbine engine 10. More specifically, in the illustrated embodiment, the gas turbine engine 10 is a high-bypass turbofan jet engine, sometimes also referred to as a "turbofan engine." As shown in FIG. 1, the gas turbine engine 10 defines an axial direction A (extending parallel to a longitudinal centerline 12 provided for reference), a radial direction R, and a circumferential direction C extending about the longitudinal centerline 12. In general, the gas turbine engine 10 includes a fan section 14 and a turbomachine 16 disposed downstream of the fan section 14.

The turbomachine 16 generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high-pressure (HP) shaft 34 (which may additionally or alternatively be a spool) drivingly connects the HP turbine 28 to the HP compressor 24. A low-pressure (LP) shaft 36 (which may additionally or alternatively be a spool) drivingly connects the LP turbine 30 to the LP compressor 22. The compressor section, the combustion section 26, the turbine section, and the jet exhaust nozzle section 32 together define a working gas flow path 37.

In the illustrated embodiment, the fan section 14 includes a fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by the fan blades 40 being operatively coupled to a suitable pitch change mechanism 44 configured to collectively vary the pitch of the fan blades 40, e.g., in unison. The gas turbine engine 10 further includes a power gearbox 46, and the fan blades 40, disk 42, and pitch change mechanism 44 are together rotatable about the longitudinal centerline 12 by LP shaft 36 across the power gearbox 46. The power gearbox 46 includes a plurality of gears for adjusting the rotational speed of the fan 38 relative to the rotational speed of the LP shaft 36, such that the fan 38 may rotate at a more efficient fan speed.

Referring still to FIG. 1, the disk 42 is covered by rotatable front hub 48 of the fan section 14 (sometimes also referred to as a "spinner"). The front hub 48 is aerodynamically contoured to promote airflow through the plurality of fan blades 40.

Additionally, the exemplary fan section 14 includes an annular fan casing or outer nacelle 50 that circumferentially surrounds the fan 38 and/or at least a portion of the turbomachine 16. It should be appreciated that the nacelle 50 is supported relative to the turbomachine 16 by a plurality of circumferentially spaced outlet guide vanes 52 in the embodiment depicted. Moreover, a downstream section 54 of the nacelle 50 extends over an outer portion of the turbomachine 16 to define a bypass airflow passage 56 therebetween.

During the operation of the gas turbine engine 10, a volume of air 58 enters the gas turbine engine 10 through an associated inlet 60 of the nacelle 50 and fan section 14. As the volume of air 58 passes across the fan blades 40, a first portion of air 62 is directed or routed into the bypass airflow passage 56, and a second portion of air 64 as indicated by arrow 64 is directed or routed into the working gas flow path 37, or more specifically into the LP compressor 22. The ratio between the first portion of air 62 and the second portion of air 64 is commonly known as a bypass ratio.

The pressure of the second portion of air 64 is then increased as it is routed through the HP compressor 24 and into the combustion section 26 for use in the combustion process. More specifically, the fuel may be supplied to one or more fuel nozzles 80 within the combustion section 26 from one or more fuel tanks 82 via one or more fuel lines or conduits 84, a pump 85, and valve 87. The fuel delivered to the combustion section 26 by the fuel nozzle(s) 80 mixes within the second portion of air 64. This air-fuel mixture is then combusted or otherwise burned to produce combustion gases 66. For example, as will be described below, an apparatus 100 for monitoring fluid flow may be positioned downstream of the pump 85 and/or the valve 87. The apparatus 100, in turn, may be used as part of a closed-loop feedback control apparatus for the pump 85 and/or the valve 87.

Thereafter, the combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft 34, thus causing the HP shaft 34 to rotate, supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft 36, thus causing the LP shaft 36 to rotate, supporting operation of the LP compressor 22 and/or rotation of the fan 38.

The combustion gases 66 are subsequently routed through the jet exhaust nozzle section 32 of the turbomachine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the gas turbine engine 10, also providing propulsive thrust. The HP turbine 28, the LP turbine 30, and the jet exhaust nozzle section 32 at least partially define a hot gas path 78 for routing the combustion gases 66 through the turbomachine 16.

The gas turbine engine 10 depicted in FIG. 1 is by way of example only, and in other embodiments, the gas turbine engine 10 may have any other suitable configuration. For example, although the gas turbine engine 10 depicted is configured as a ducted gas turbine engine (i.e., including the outer nacelle 50), in other embodiments, the gas turbine engine 10 may be an unducted gas turbine engine (such that the fan 38 is an unducted fan, and the outlet guide vanes 52 are cantilevered from the outer casing 18). Additionally, or alternatively, although the gas turbine engine 10 depicted is configured as a geared gas turbine engine (i.e., including the power gearbox 46) and a variable pitch gas turbine engine (i.e., including a fan 38 configured as a variable pitch fan), in other embodiments, the gas turbine engine 10 may additionally or alternatively be configured as a direct drive gas turbine engine (such that the LP shaft 36 rotates at the same speed as the fan 38), as a fixed pitch gas turbine engine (such that the fan 38 includes fan blades 40 that are not rotatable about a pitch axis P), or both. Furthermore, in still other exemplary embodiments, aspects of the present disclosure may be incorporated into any other suitable gas turbine engine. For example, in other exemplary embodiments, aspects of the present disclosure may (as appropriate) be incorporated into, e.g., a turboprop gas turbine engine, a turboshaft gas turbine engine, or a turbojet gas turbine engine.

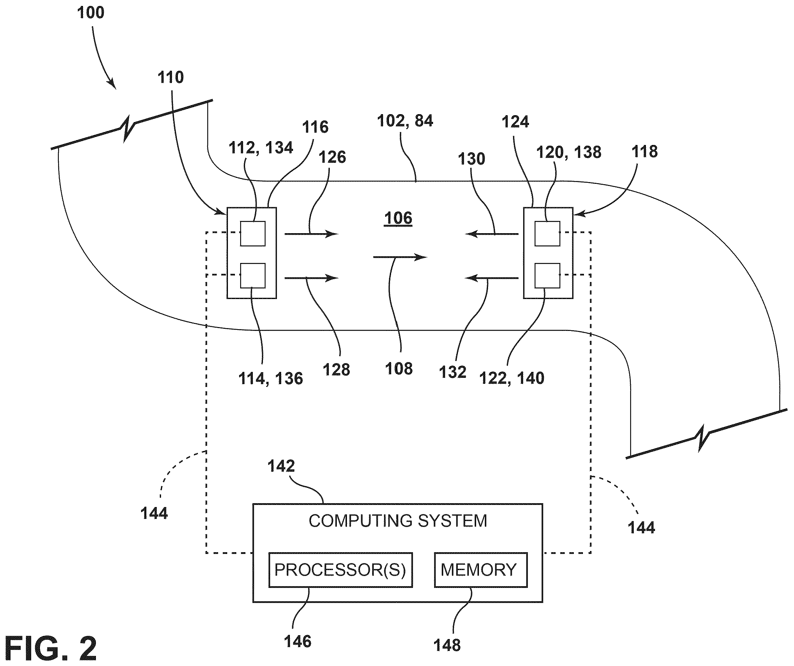

Referring now to FIG. 2, a diagrammatic view of one embodiment of a apparatus 100 for monitoring fluid flow is illustrated in accordance with aspects of the present subject matter. In general, the apparatus 100 will be described herein with reference to the gas turbine engine 10 described above with reference to FIG. 1. However, it should be appreciated by those of ordinary skill in the art that the disclosed apparatus 100 may generally be utilized with gas turbine engine having any other suitable engine configuration and with any other suitable application outside of gas turbine engine.

As shown in FIG. 2, the apparatus 100 includes a fluid conduit 102 defining a flow passage 106 through which a fluid flows in a direction of flow 108. For example, in the illustrated embodiment, the fluid conduit 102 may be one of the fuel conduits 84 that supply fuel to the gas turbine engine 10. In such an embodiment, the fuel flow through the flow passage 106 from the fuel tank(s) 82 (FIG. 1) in the direction of flow 108 to the fuel nozzle(s) 80 (FIG. 1). However, in alternative embodiments, the fluid conduit 102 may be configured to convey any other suitable type of fluid, such as oil, coolant, sCO₂, or the like.

The fluid flowing through the fluid conduit 102 may be a liquid, a gas, or a mixture thereof.

Furthermore, the apparatus 100 includes an upstream sensor assembly 110 positioned within the flow passage 106. In some embodiments, the upstream sensor assembly 110 may be positioned within the flow passage 106 such that the upstream sensor assembly 110 is in direct contact with the fluid flow through the flow passage 106. Alternatively, the upstream sensor assembly 110 may be buffered from the fluid flow through the flow passage 106 via a buffer rod (not show) or other suitable mechanism. As shown, the upstream sensor assembly 110 includes a first transceiver-based sensor 112 and a second transceiver-based sensor 114. In some embodiments, the first and second transceiver-based sensors 112, 114 may be positioned within a housing 116. That is, in such embodiments, the first and second transceiver-based sensors 112, 114 may be positioned within the same housing. However, in other embodiments, the first and second transceiver-based sensors 112, 114 may be positioned in different housings. Separate housings may increase the weight and volume of the upstream sensor assembly 110.

Additionally, the apparatus 100 includes a downstream sensor assembly 118 positioned within the flow passage 106 downstream of the upstream sensor assembly 110 relative to a direction of flow 108 of the fluid through the flow passage 106. In some embodiments, the downstream sensor assembly 118 may be positioned within the flow passage 106 such that the downstream sensor assembly 118 is in direct contact with the fluid flow through the flow passage 106. Alternatively, the downstream sensor assembly 118 may be buffered from the fluid flow through the flow passage 106 via a buffer rod (not show) or other suitable mechanism. As shown, the downstream sensor assembly 118 includes a third transceiver-based sensor 120 and a fourth transceiver-based sensor 122. For example, the first and third transceiver-based sensors 112, 120 may operate together to capture data for use in determining a first value of a flow parameter associated with the fluid flowing through the flow passage 106 (e.g., the flow rate). Similarly, the second and fourth transceiver-based sensors 114, 122 may operate together to capture data for use in determining a second value of the flow parameter (e.g., a redundant value). In some embodiments, the third and fourth transceiver-based sensors 120, 122 may be positioned within a housing 124. That is, in such embodiments, the third and fourth transceiver-based sensors 120, 122 may be positioned within the same housing. However, in other embodiments, the third and fourth transceiver-based sensors 120, 122 may be positioned in different housings. Separate housings may increase the weight and volume of the downstream sensor assembly 118.

In general, the first, second, third, and fourth transceiver-based sensors 112, 114, 120, 122 are configured to emit sensor signals through the fluid. The time-of-flight (TOF) of these signals is used to determine the values of the redundant flow measurements. As used herein, the "time-of-flight" or TOF is the amount time elapsing between the emission of a signal from on the transceiver-based sensors and the receipt of such signal by another of the transceiver-based sensors. More specifically, in several embodiments, the first transceiver-based sensor 112 is configured to emit a first sensor signal 126. For example, the TOF of the first sensor signal 126 may be the time between when the first transceiver-based sensor 112 emits the first sensor signal 126 and when the third transceiver-based sensor 120 receives the first sensor signal 126. Moreover, the second transceiver-based sensor 114 is configured to emit a second sensor signal 128. For example, the TOF of the second sensor signal 128 may be the time between when the second first transceiver-based sensor 114 emits the second sensor signal 128 and when the fourth transceiver-based sensor 122 receives the second sensor signal 128. In addition, the third transceiver-based sensor 120 is configured to emit a third sensor signal 130. For example, the TOF of the third sensor signal 130 may be the time between when the third first transceiver-based sensor 120 emits the third sensor signal 130 and when the first transceiver-based sensor 112 receives the third sensor signal 130. Furthermore, the fourth transceiver-based sensor 122 is configured to emit a fourth sensor signal 132. For example, the TOF of the fourth sensor signal 132 may be the time between when the fourth first transceiver-based sensor 122 emits the fourth sensor signal 132 and when the second transceiver-based sensor 114 receives the fourth sensor signal 132.

The positioning of the first, second, third, and fourth transceiver-based sensors 112, 114, 120, 122 improves the operation the apparatus 100 (and the associated gas turbine engine 10). More specifically, in several embodiments, the first and second transceiver-based sensors 112, 114 are oriented relative to the third and fourth transceiver-based sensors 120, 122 such that the third and fourth transceiver-based sensors 120, 122 receive the first sensor signal 126 emitted by the first transceiver-based sensor 112 and the second sensor signal 128 emitted by the second transceiver-based sensor 114. Similarly, the first and second transceiver-based sensors 112, 114 may be oriented relative to the third and fourth transceiver-based sensors 120, 122 such that the first and second transceiver-based sensors 112, 114 receive the third sensor signal 130 emitted by the third transceiver-based sensor 120 and the fourth sensor signal 132 emitted by the fourth transceiver-based sensor 122. Various arrangements of such sensor positioning will be described in detail below. These arrangements ensure that the first, second, third, and fourth sensor signals 126, 128, 130, 132 all experience the same flow conditions within the flow passage 106. In this respect, variations in the redundant flow condition measurements are caused by variations in the sensors themselves (e.g., the first, second, third, and fourth transceiver-based sensors 112, 114, 120, 122) and not the flow conditions within the flow passage 106. Thus, the apparatus 100 can more accurately determine when variations in the operation of redundant transceiver-based sensors used for fluid flow monitoring occur than conventional systems.

In some instances, only two of the transceiver-based sensors (e.g., one of the first and second transceiver-based sensors 112, 114 and one the third and fourth transceiver-based sensors 120, 122) may be used at a given time. In such instances, the other two transceiver-based sensors (e.g., the other of the first and second transceiver-based sensors 112, 114 and the other of the third and fourth transceiver-based sensors 120, 122) may be in a stand-by mode. The sensor signals are still directed at the transceiver-based sensors in stand-by mode, but those transceiver-based sensor may not be reading or otherwise processing the signal. For example, in some instances, the fourth transceiver-based sensor 122 may be in stand-by mode. In such instances, the first transceiver-based sensor 112 may emit the first sensor signal 126 at both the third and fourth transceiver-based sensors 120, 122. However, in such instances, the third transceiver-based sensor 120 receives and processes the first sensor signal 126, while the fourth transceiver-based sensor 122 simply ignores the first sensor signal 126.

The first, second, third, and fourth transceiver-based sensors 112, 114, 120, 122 may be configured as any suitable type of sensors or sensing devices configured to operate as described above. For example, in several embodiments, the first, second, third, and fourth transceiver-based sensors 112, 114, 120, 122 may be respectively configured as first, second, third, and fourth ultrasonic sensors 134, 136, 138, 140. In such embodiments, the first ultrasonic sensor 134 is configured to emit a first ultrasonic signal, the second ultrasonic sensor 136 is configured to emit a second ultrasonic signal, the third ultrasonic sensor 138 is configured to emit a third ultrasonic signal, and the fourth ultrasonic sensor 140 is configured to emit a fourth ultrasonic signal.

Moreover, the apparatus 100 includes a computing system 142 communicatively coupled to one or more components of the apparatus 100 to allow the operation of such components to be electronically or automatically controlled by the computing system 142. For instance, the computing system 142 may be communicatively coupled to the first, second, third, and fourth transceiver-based sensors 112, 114, 120, 122 via a communicative link 144. As such, the computing system 142 may be configured to receive data from t the first, second, third, and fourth transceiver-based sensors 112, 114, 120, 122, which is indicative of the times of flight of the first, second, third, and fourth sensor signals 126, 128, 130, 132. In addition, the computing system 142 may be communicatively coupled to any other suitable components of the apparatus 100.

In general, the computing system 142 may include one or more processor-based devices, such as a given controller or computing device or any suitable combination of controllers or computing devices. Thus, in several embodiments, the computing system 142 may include one or more processor(s) 146 and associated memory device(s) 148 configured to perform a variety of computer-implemented functions. As used herein, the term "processor" refers not only to integrated circuits referred to in the art as being included in a computer, but also refers to a controller, a microcontroller, a microcomputer, a programmable logic circuit (PLC), an application specific integrated circuit, and other programmable circuits. Additionally, the memory device(s) 148 of the computing system 142 may generally include memory element(s) including, but not limited to, a computer-readable medium (e.g., random access memory RAM)), a computer-readable non-volatile medium (e.g., a flash memory), a floppy disk, a compact disk-read only memory (CD-ROM), a magnetooptical disk (MOD), a digital versatile disk (DVD) and/or other suitable memory elements. Such memory device(s) 148 may generally be configured to store suitable computer-readable instructions that, when implemented by the processor(s) 146, configure the computing system 142 to perform various computer-implemented functions, such as one or more aspects of the methods and algorithms that will be described herein. In addition, the computing system 142 may also include various other suitable components, such as a communications circuit or module, one or more input/output channels, a data/control bus, and/or the like.

The various functions of the computing system 142 may be performed by a single processor-based device or may be distributed across any number of processor-based devices, in which instance such devices may be considered to form part of the computing system 142. For instance, the functions of the computing system 142 may be distributed across multiple application-specific controllers or computing devices, such as a fuel system controller, an engine controller, and/or the like.

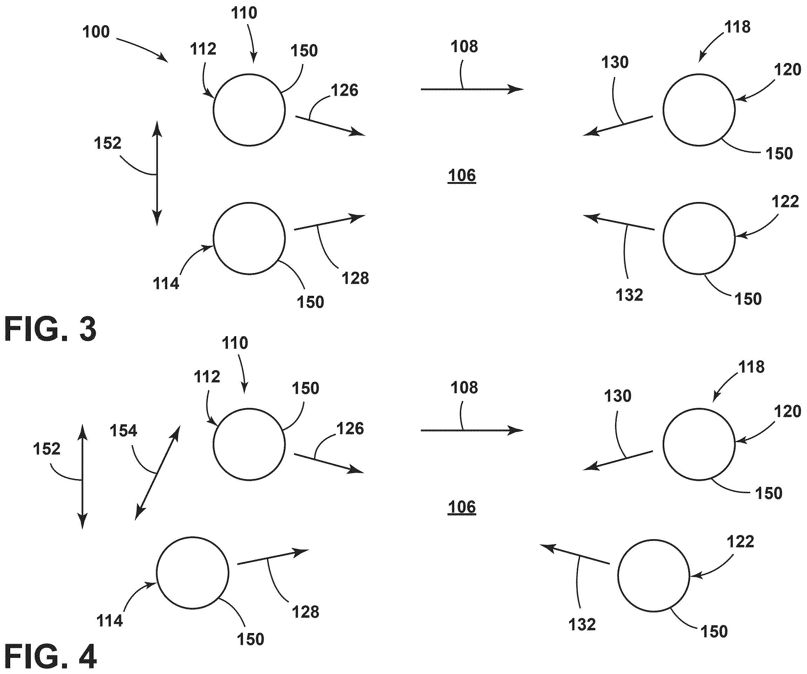

FIG. 3 is a simplified diagrammatic view of the apparatus 100 shown in FIG. 2, particularly illustrating one arrangement of the first, second, third, and fourth transceiver-based sensors 112, 114, 120, 122. As shown, the first, second, third, and fourth transceiver-based sensors 112, 114, 120, 122 each define a circular perimeter 150. In the illustrated embodiment, the first transceiver-based sensor 112 is spaced apart from the second transceiver-based sensor 114 in a vertical direction 152 that is perpendicular to the direction of flow 108 and aligned with the third transceiver-based sensor 120 in the vertical direction 152. Furthermore, the second transceiver-based sensor 114 is spaced apart from the first transceiver-based sensor 112 in the vertical direction 152 and aligned with the fourth transceiver-based sensor 122 in the vertical direction 152. Additionally, the third transceiver-based sensor 120 is spaced apart from the fourth transceiver-based sensor 122 in the vertical direction 152 and aligned with the first transceiver-based sensor 112 in the vertical direction 152. Moreover, the fourth transceiver-based sensor 122 is spaced apart from the third transceiver-based sensor 120 in the vertical direction 152 and aligned with the second transceiver-based sensor 114 in the vertical direction 152.

FIG. 4 is a simplified diagrammatic view of the apparatus 100 shown in FIG. 2, particularly illustrating another arrangement of the first, second, third, and fourth transceiver-based sensors 112, 114, 120, 122. As shown, the first, second, third, and fourth transceiver-based sensors 112, 114, 120, 122 each define a circular perimeter 150. In the illustrated embodiment, the first transceiver-based sensor 112 is spaced apart from the second transceiver-based sensor 114 in a lateral direction 154 that is perpendicular to the direction of flow 108 (and to the vertical direction 152) and aligned with the third transceiver-based sensor 120 in the lateral direction 154. Furthermore, the second transceiver-based sensor 114 is spaced apart from the first transceiver-based sensor 112 in the lateral direction 154 and aligned with the fourth transceiver-based sensor 122 in the lateral direction 154. Additionally, the third transceiver-based sensor 120 is spaced apart from the fourth transceiver-based sensor 122 in the lateral direction 154 and aligned with the first transceiver-based sensor 112 in the lateral direction 154. Moreover, the fourth transceiver-based sensor 122 is spaced apart from the third transceiver-based sensor 120 in the lateral direction 154 and aligned with the second transceiver-based sensor 114 in the lateral direction 154.

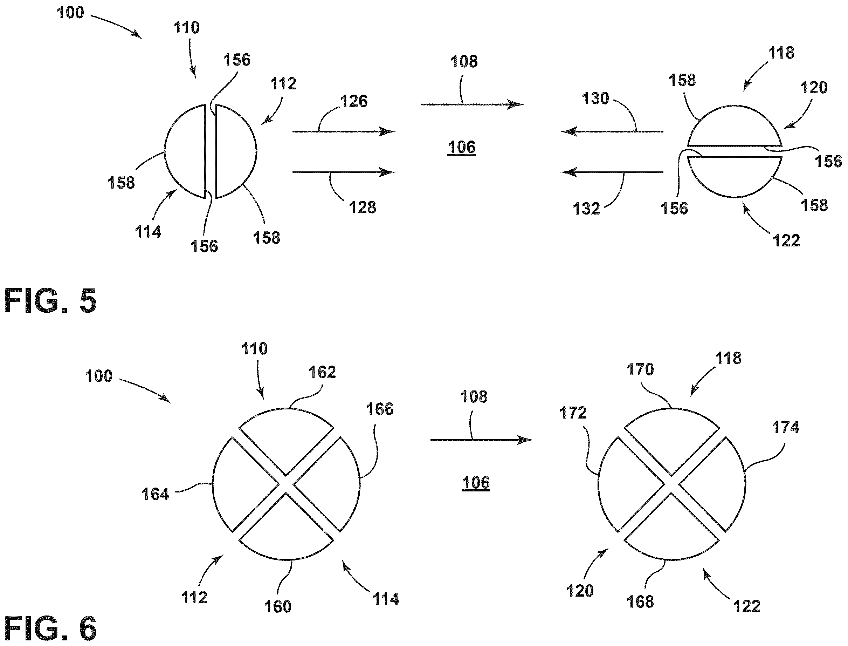

FIG. 5 is a simplified diagrammatic view of the apparatus 100 shown in FIG. 2, particularly illustrating a further arrangement of the first, second, third, and fourth transceiver-based sensors 112, 114, 120, 122. As shown, the first, second, third, and fourth transceiver-based sensors 112, 114, 120, 122 each define a perimeter having a linear portion 156 and a non-linear portion 158. For example, in the illustrated embodiment, the first, second, third, and fourth transceiver-based sensors 112, 114, 120, 122 each define a D-shaped perimeter. More specifically, as shown in FIG. 5, the first and second transceiver-based sensors 112, 114 are oriented in the same direction or substantially the same direction. Similarly, the third and fourth transceiver-based sensors 120, 122 are oriented in the same direction or substantially the same direction. As used herein, two sensors are oriented in "substantially the same direction" when an angle of 0 degrees to 10 degrees is defined between their linear portions. However, as shown, a substantially right angle is defined between the first transceiver-based sensor 112 and the third transceiver-based sensor 120 and between the second transceiver-based sensor 114 and the fourth transceiver-based sensor 122. As used herein, a "substantially right angle" is defined between two sensors when an angle of 0 degrees to 10 degrees is defined between their linear portions.

FIG. 6 is a simplified diagrammatic view of the apparatus 100 shown in FIG. 2, particularly illustrating a further arrangement of the first, second, third, and fourth transceiver-based sensors 112, 114, 120, 122. As shown, the first, second, third, and fourth transceiver-based sensors 112, 114, 120, 122 each include first and second wedge-shaped portions. More specifically, the first transceiver-based sensor 112 includes a first wedge-shaped portion 160 and a second wedge-shaped portion 162. Similarly, the second transceiver-based sensor 114 includes a first wedge-shaped portion 164 and a second wedge-shaped portion 166. The wedge-shaped portions of the first and second transceiver-based sensors 112, 114 alternate. For example, the first wedge-shaped portion 160 of the first transceiver-based sensor 112 may be positioned between the first wedge-shaped portion 164 and the second wedge-shaped portion 166 of the second transceiver-based sensor 114. Furthermore, the third transceiver-based sensor 120 includes a first wedge-shaped portion 168 and a second wedge-shaped portion 170. Similarly, the fourth transceiver-based sensor 122 includes a first wedge-shaped portion 172 and a second wedge-shaped portion 174. The wedge-shaped portions of the third and fourth transceiver-based sensors 120, 122 alternate. In other embodiments, the first, second, third, and fourth transceiver-based sensors 112, 114, 120, 122 may have any other suitable number of wedge-shaped portions.

The arrangements and/or configurations of the first, second, third, and fourth transceiver-based sensors 112, 114, 120, 122 shown in FIGS. 3-6 facilitate the operation of such sensors 112, 114, 120, 122 as described herein. More specifically, due to this arrangement, the first transceiver-based sensor 112 is configured to emit the first sensor signal 126 at the third and fourth transceiver-based sensors 120, 122. In addition, the second transceiver-based sensor 114 is configured to emit the second sensor signal 128 at the third and fourth transceiver-based sensors 120, 122. Furthermore, the third transceiver-based sensor 120 is configured to emit the third sensor signal 130 at the first and second transceiver-based sensors 112, 114. Additionally, the fourth transceiver-based sensor 112 is configured to emit the fourth sensor signal 126 at the third and fourth transceiver-based sensors 120, 122. Thus, the first, second, third, and fourth sensor signals 126, 128, 130, 132 all experience the same flow conditions. For example, the first, second, third, and fourth sensor signals 126, 128, 130, 132 may take two redundant measures of the flow rate of the same volume of fuel within the fuel lines 84. Thus, because the first, second, third, and fourth sensor signals 126, 128, 130, 132 see the same portion of the fuel flow, these redundant fuel flow measurements are much closer to each other.

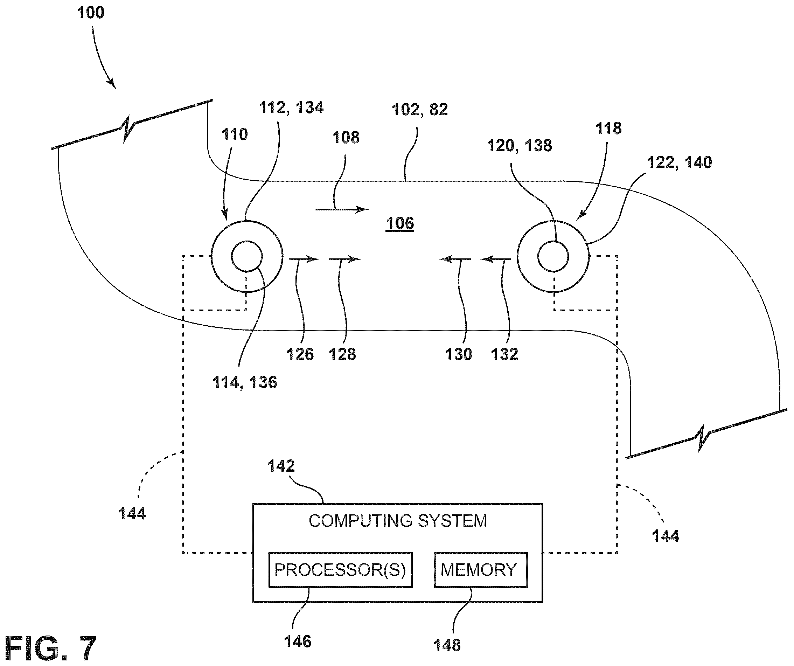

FIG. 7 is a diagrammatic view of another embodiment of the apparatus 100. Like the embodiment shown in FIG. 2, the apparatus 100 shown in FIG. 7 includes the fluid conduit 102, the first sensor assembly 110, the second sensor assembly 114, and the computing system 142. However, unlike the embodiment shown in FIG. 2, in the apparatus 100 shown in FIG. 7, the first and second transceiver-based sensors 112, 114 are concentric with each other. Moreover, the third and fourth transceiver-based sensors 120, 122 are concentric with each other. In this respect, one of the first transceiver-based sensor 112 or the second transceiver-based sensor 114 surrounds the other of the first transceiver-based sensor 112 or the second transceiver-based sensor 114. Similarly, one of the third transceiver-based sensor 120 or the fourth transceiver-based sensor 122 surrounds the other of the third transceiver-based sensor 120 or the fourth transceiver-based sensor 122. For example, in the embodiment shown in FIG. 7, the first transceiver-based sensor 112 surrounds or otherwise encloses the second transceiver-based sensor 114, and the fourth transceiver-based sensor 122 surrounds or otherwise encloses the third transceiver-based sensor 120.

The arrangements and/or configuration of the first, second, third, and fourth transceiver-based sensors 112, 114, 120, 122 shown in FIG. 7 facilitate the operation of such sensors 112, 114, 120, 122 as described herein. More specifically, due to this arrangement, the first or second sensor signal 126, 128 emitted by the outer one of the first or second transceiver-based sensor 112, 114 (e.g., the first sensor signal 126 emitted by the first transceiver-based sensor 112 in the configuration shown in FIG. 7) is directed at the inner one of the third or fourth transceiver-based sensor 120, 122 (e.g., the third transceiver-based sensor 120 in the configuration shown in FIG. 7). Conversely, the first or second sensor signal 126, 128 emitted by the inner one of the first or second transceiver-based sensor 112, 114 (e.g., the second sensor signal 128 emitted by the second transceiver-based sensor 114 in the configuration shown in FIG. 7) is directed at the outer one of the third or fourth transceiver-based sensor 120, 122 (e.g., the fourth transceiver-based sensor 122 in the configuration shown in FIG. 7). Additionally, the third or fourth sensor signal 130, 132 emitted by the outer one of the third or fourth transceiver-based sensor 120, 122 (e.g., the fourth sensor signal 132 emitted by the fourth transceiver-based sensor 122 in the configuration shown in FIG. 7) is directed at the inner one of the first or second transceiver-based sensor 112, 114 (e.g., the second transceiver-based sensor 114 in the configuration shown in FIG. 7). Conversely, the third or fourth sensor signal 130, 132 emitted by the inner one of the third or fourth transceiver-based sensor 120, 122 (e.g., the third sensor signal 130 emitted by the third transceiver-based sensor 120 in the configuration shown in FIG. 7) is directed at the outer one of the first or second transceiver-based sensor 112, 114 (e.g., the first transceiver-based sensor 112 in the configuration shown in FIG. 7). Thus, the first, second, third, and fourth sensor signals 126, 128, 130, 132 all experience the same flow conditions.

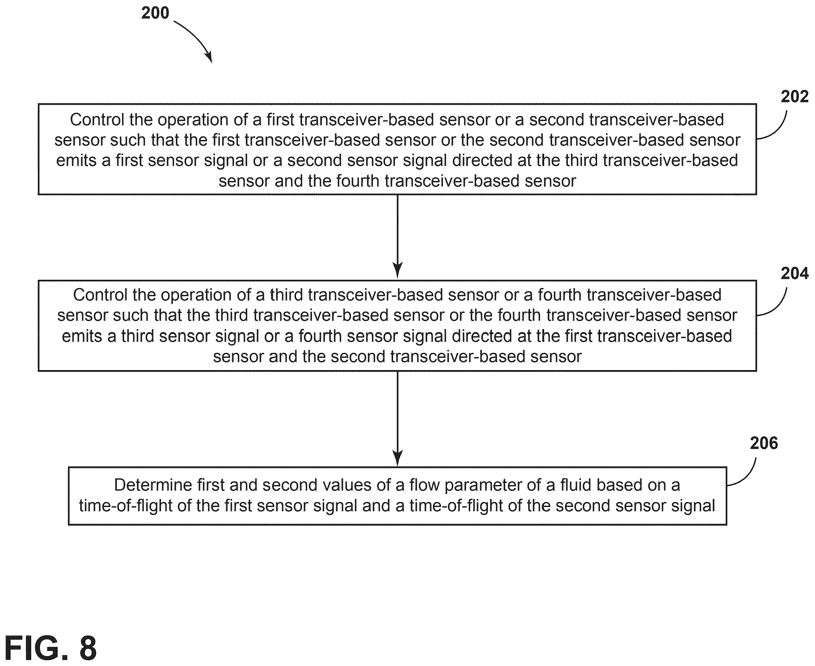

Referring now to FIG. 8, a flow diagram of one embodiment of example control logic 200 that may be executed by the computing system 142 (or any other suitable computing system) for monitoring fluid flow is illustrated in accordance with aspects of the present subject matter. Specifically, the control logic 200 shown in FIG. 3 is representative of steps of one embodiment of an algorithm that can be executed to monitor fluid flow in a manner that improves the accuracy and precision of the flow measurements. Specifically, the control logic 200 may be advantageously utilized in association with the apparatus 100 to allow for in situ calibration of redundant transceiver-based sensors used to monitor fluid flow. For example, in an embodiment implemented in an aerospace application, the control logic 200 allows for calibration of the apparatus to enable redundant a redundant fuel flow measurements to be captured from the same volume of the fuel. Thus, differences in the flow along the length of the fuel lines (e.g., due to bends, etc.) will not impact the redundant measurements.

As shown, at (202), the control logic 200 includes controlling the operation of a first or second transceiver-based sensor such that the first or second transceiver-based sensor emits a corresponding first or second sensor signal directed at third and fourth transceiver-based sensors. Specifically, in several embodiments, the computing system 142 is configured to control the operation of the first or second transceiver-based sensors 112, 114 such that the first or second transceiver-based sensor 112, 114 emits the corresponding first or second sensor signal 126, 128 directed at the third and fourth transceiver-based sensors 120, 122.

Furthermore, at (204), the control logic 200 includes controlling the operation of the third or fourth transceiver-based sensor such that the third or fourth transceiver-based sensor emits a corresponding third or fourth sensor signal directed at the first and second transceiver-based sensors. Specifically, in several embodiments, the computing system 142 is configured to control the operation of the third or fourth transceiver-based sensors 120, 122 such that the third or fourth transceiver-based sensor 120, 122 emits the corresponding third or fourth sensor signal 130, 132 directed at the first and second transceiver-based sensors 112, 114.

Furthermore, at (204), the control logic 200 includes determining first and second values of a flow parameter of the fluid based on the time-of-flight of the first or second sensor signal and the time-of-flight of the third or fourth sensor signal. Specifically, in several embodiments, the computing system 142 is configured to determine first and second values of a flow parameter (e.g., the flow rate) of the fluid based on a time-of-flight of the first or second sensor signal 126, 128 and the time-of-flight of the third or fourth sensor signal 130, 132. For example, in some embodiments, the computing system 142 may determine the first value of the flow parameter based on the difference between the times-of-flight of the first sensor signal 126 and the third sensor signal 130. Similarly, in such embodiments, the computing system 142 may determine the second value of the flow parameter based on the difference between the times-of-flight of the second sensor signal 128 and the fourth sensor signal 132. In one embodiment, the computing system 142 may use a look-up table stored within its memory device(s) 148 that correlates the difference in times-of-flight with a flow parameter value.

The arrangements of the first, second, third, and fourth transceiver-based sensors 112, 114, 120, 122 described above improve the operation of the gas turbine engine. More specifically, in certain applications (e.g., aviation and aerospace applications), it is necessary to have redundant fluid flow sensors. For example, the first and third transceiver-based sensors 112, 120 may operate together to capture data for determining one flow measurement. Similarly, the second and fourth transceiver-based sensors 114, 122 may operate together to capture data for determining another flow measurement (e.g., a redundant flow measurement). However, the flow conditions within the fluid conduit may not be uniform throughout the flow passage. For example, bends or curves in the fluid conduit may result in one pair of transceiver-based sensors capturing data indicative of one flow condition and the other pair of transceiver-based sensors capturing data indicative of a different flow condition. As described above, in several embodiments of the disclosed apparatus 100, the third and fourth transceiver-based sensors 120, 122 both receive the first and second sensor signals emitted by the first and second transceiver-based sensors 110, 112. Likewise, in such embodiments, the first and second transceiver-based sensors 110, 112 both receive the third and fourth sensor signals emitted by the third and fourth transceiver-based sensors 120, 122. Moreover, as described above, in other embodiments, the first and second transceiver-based sensors 110, 112 are concentric and the third and fourth transceiver-based sensors 120, 122 are concentric. These arrangements ensure that the first, second, third, and fourth sensor signals all experience the same flow conditions. In this respect, variations in the redundant flow condition measurements are caused by variations in the sensors themselves and not the flow conditions. Thus, the disclosed apparatus 100 can more accurately determine when variations in the operation of redundant transceiver-based sensors used for fluid flow monitoring occur than conventional systems.

Further aspects are provided by the subject matter of the following clauses:
A apparatus for monitoring fluid flow, the apparatus comprising: a fluid conduit defining a flow passage through which a fluid flows; an upstream sensor assembly associated with the flow passage, the upstream sensor assembly including a first transceiver-based sensor and a second transceiver-based sensor; and a downstream sensor assembly associated with the flow passage and positioned downstream of the upstream sensor assembly relative to a direction of flow of the fluid through the flow passage, the downstream sensor assembly including a third transceiver-based sensor and a fourth transceiver-based sensor, wherein the first transceiver-based sensor and the second transceiver-based sensor are oriented relative to the third transceiver-based sensor and the fourth transceiver-based sensor such that the third transceiver-based sensor and the fourth transceiver-based sensor receive a first sensor signal emitted by the first transceiver-based sensor and a second sensor signal emitted by the second transceiver-based sensor.

The apparatus of one or more clauses, wherein the first transceiver-based sensor and the second transceiver-based sensor are further oriented relative to the third transceiver-based sensor and the fourth transceiver-based sensor such that the first transceiver-based sensor and the second transceiver-based sensor receive a third sensor signal emitted by the third transceiver-based sensor and a fourth sensor signal emitted by the fourth transceiver-based sensor.

The apparatus of one or more clauses, wherein the first transceiver-based sensor, the second transceiver-based sensor, the third transceiver-based sensor, and the fourth transceiver-based sensor each define a circular perimeter.

The apparatus of one or more clauses, wherein: the first transceiver-based sensor is spaced apart from the second transceiver-based sensor in a lateral direction that is perpendicular to the direction of flow and aligned with the third transceiver-based sensor in the lateral direction, and the second transceiver-based sensor is aligned with the fourth transceiver-based sensor in the lateral direction.

The apparatus of one or more clauses, wherein: the first transceiver-based sensor is spaced apart from the second transceiver-based sensor in a vertical direction that is perpendicular to the direction of flow and aligned with the third transceiver-based sensor in the vertical direction, and the second transceiver-based sensor is aligned with the fourth transceiver-based sensor in the vertical direction.

The apparatus of one or more clauses, wherein the first transceiver-based sensor, the second transceiver-based sensor, the third transceiver-based sensor, and the fourth transceiver-based sensor each define a perimeter having a linear portion and a non-linear portion.

The apparatus of one or more clauses, wherein the first transceiver-based sensor, the second transceiver-based sensor, the third transceiver-based sensor, and the fourth transceiver-based sensor each define a D-shaped perimeter.

The apparatus of one or more clauses, wherein: the first transceiver-based sensor and the second transceiver-based sensor are oriented in substantially the same direction, and the third transceiver-based sensor and the fourth transceiver-based sensor are oriented in substantially the same direction.

The apparatus of one or more clauses, wherein a substantially right angle is defined between the first transceiver-based sensor and the third transceiver-based sensor and between the second transceiver-based sensor and the fourth transceiver-based sensor.

The apparatus of one or more clauses, wherein the first transceiver-based sensor, the second transceiver-based sensor, the third transceiver-based sensor, and the fourth transceiver-based sensor each include a first wedge-shaped portion and a second wedge-shaped portion.

The apparatus of one or more clauses, wherein the first wedge-shaped portion of the first transceiver-based sensor is positioned between the first wedge-shaped portion and the second wedge-shaped portion of the second transceiver-based sensor.

The apparatus of one or more clauses, wherein the first transceiver-based sensor, the second transceiver-based sensor, the third transceiver-based sensor, and the fourth transceiver-based sensor respectively comprise a first ultrasonic sensor, a second ultrasonic sensor, a third ultrasonic sensor, and a fourth ultrasonic sensor.

The apparatus of one or more clauses, further comprising: a computing system communicatively coupled to the first transceiver-based sensor, the second transceiver-based sensor, the third transceiver-based sensor, and the fourth transceiver-based sensor, the computing system configured to: control an operation of the first transceiver-based sensor or the second transceiver-based sensor such that the first transceiver-based sensor or the second transceiver-based sensor emits the first sensor signal or the second sensor signal directed at the third transceiver-based sensor and the fourth transceiver-based sensor; control an operation of the third transceiver-based sensor or the fourth transceiver-based sensor such that the third transceiver-based sensor or the fourth transceiver-based sensor emits the third sensor signal or the fourth sensor signal directed at the first transceiver-based sensor and the second transceiver-based sensor; and determine first and second values of a flow parameter of the fluid based on a time-of-flight of the first sensor signal or the second sensor signal and a time-of-flight of the third sensor signal or the fourth sensor signal.

A apparatus for monitoring fluid flow, the apparatus comprising: a fluid conduit defining a flow passage through which a fluid flows; an upstream sensor assembly associated with the flow passage, the upstream sensor assembly including a first transceiver-based sensor and a second transceiver-based sensor that are concentric with each other; and a downstream sensor assembly associated with the flow passage and positioned downstream of the upstream sensor assembly relative to a direction of flow of the fluid through the flow passage, the downstream sensor assembly including a third transceiver-based sensor and a fourth transceiver-based sensor that are concentric with each other.

The apparatus of one or more clauses, wherein: one of the first transceiver-based sensor or the second transceiver-based sensor surrounds the other of the first transceiver-based sensor or the second transceiver-based sensor, and one of the third transceiver-based sensor or the fourth transceiver-based sensor surrounds the other of the third transceiver-based sensor or the fourth transceiver-based sensor.

The apparatus of one or more clauses, wherein: the first sensor signal or the second sensor signal emitted by an outer one of the first transceiver-based sensor or the second transceiver-based sensor is directed at an inner one of the third transceiver-based sensor or the fourth transceiver-based sensor, and the first sensor signal or the second sensor signal emitted by an inner one of the first transceiver-based sensor or the second transceiver-based sensor is directed at an outer one of the third transceiver-based sensor or the fourth transceiver-based sensor.

The apparatus of one or more clauses, wherein the first transceiver-based sensor, the second transceiver-based sensor, the third transceiver-based sensor, and the fourth transceiver-based sensor respectively comprise a first ultrasonic sensor, a second ultrasonic sensor, a third ultrasonic sensor, and a fourth ultrasonic sensor.

A apparatus for monitoring fuel flow associated with a gas turbine engine, the apparatus comprising: a fuel conduit defining a flow passage through which a fuel flows; an upstream sensor assembly positioned within the flow passage, the upstream sensor assembly including a first ultrasonic sensor and a second ultrasonic sensor; and a downstream sensor assembly positioned within the flow passage downstream of the upstream sensor assembly relative to a direction of flow of the fuel through the fuel passage, the downstream sensor assembly including a third ultrasonic sensor and a fourth ultrasonic sensor, wherein the first ultrasonic sensor and the second ultrasonic sensor are oriented relative to the third ultrasonic sensor and the fourth ultrasonic sensor such that the third ultrasonic sensor and the fourth ultrasonic sensor receive a first ultrasonic signal emitted by the first ultrasonic sensor and a second ultrasonic signal emitted by the second ultrasonic sensor.

The apparatus of one or more clauses, wherein the first ultrasonic sensor and the second ultrasonic sensor are further oriented relative to the third ultrasonic sensor and the fourth ultrasonic sensor such that the first ultrasonic sensor and the second ultrasonic sensor receive a third ultrasonic signal emitted by the third ultrasonic sensor and a fourth ultrasonic signal emitted by the fourth ultrasonic sensor.

The apparatus of one or more clauses, wherein the first ultrasonic sensor, the second ultrasonic sensor, the third ultrasonic sensor, and the fourth ultrasonic sensor each define a circular perimeter.

This written description uses examples to disclose the present disclosure, including the best mode, and also to enable any person skilled in the art to practice the disclosure, including making and using any devices or systems and performing any incorporated methods. The patentable scope of the disclosure is defined by the claims and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A apparatus for monitoring fluid flow, the apparatus comprising:
a fluid conduit defining a flow passage through which a fluid flows;
an upstream sensor assembly associated with the flow passage, the upstream sensor assembly including a first transceiver-based sensor and a second transceiver-based sensor; and
a downstream sensor assembly associated with the flow passage and positioned downstream of the upstream sensor assembly relative to a direction of flow of the fluid through the flow passage, the downstream sensor assembly including a third transceiver-based sensor and a fourth transceiver-based sensor,
wherein the first transceiver-based sensor and the second transceiver-based sensor are oriented relative to the third transceiver-based sensor and the fourth transceiver-based sensor such that the third transceiver-based sensor and the fourth transceiver-based sensor receive a first sensor signal emitted by the first transceiver-based sensor and a second sensor signal emitted by the second transceiver-based sensor.

2. The apparatus of claim 1, wherein the first transceiver-based sensor and the second transceiver-based sensor are further oriented relative to the third transceiver-based sensor and the fourth transceiver-based sensor such that the first transceiver-based sensor and the second transceiver-based sensor receive a third sensor signal emitted by the third transceiver-based sensor and a fourth sensor signal emitted by the fourth transceiver-based sensor.

3. The apparatus of claim 1 or 2, wherein the first transceiver-based sensor, the second transceiver-based sensor, the third transceiver-based sensor, and the fourth transceiver-based sensor each define a circular perimeter.

4. The apparatus of claim 3, wherein:
the first transceiver-based sensor is spaced apart from the second transceiver-based sensor in a lateral direction that is perpendicular to the direction of flow and aligned with the third transceiver-based sensor in the lateral direction, and
the second transceiver-based sensor is aligned with the fourth transceiver-based sensor in the lateral direction.

5. The apparatus of claim 3, wherein:
the first transceiver-based sensor is spaced apart from the second transceiver-based sensor in a vertical direction that is perpendicular to the direction of flow and aligned with the third transceiver-based sensor in the vertical direction, and
the second transceiver-based sensor is aligned with the fourth transceiver-based sensor in the vertical direction.

6. The apparatus of any of claims 1 to 5, wherein the first transceiver-based sensor, the second transceiver-based sensor, the third transceiver-based sensor, and the fourth transceiver-based sensor each define a perimeter having a linear portion and a non-linear portion.

7. The apparatus of claim 6, wherein the first transceiver-based sensor, the second transceiver-based sensor, the third transceiver-based sensor, and the fourth transceiver-based sensor each define a D-shaped perimeter.

8. The apparatus of claim 6 or 7, wherein:
the first transceiver-based sensor and the second transceiver-based sensor are oriented in substantially the same direction, and
the third transceiver-based sensor and the fourth transceiver-based sensor are oriented in substantially the same direction, and
wherein, optionally, a substantially right angle is defined between the first transceiver-based sensor and the third transceiver-based sensor and between the second transceiver-based sensor and the fourth transceiver-based sensor.

9. The apparatus of claim 6, wherein the first transceiver-based sensor, the second transceiver-based sensor, the third transceiver-based sensor, and the fourth transceiver-based sensor each include a first wedge-shaped portion and a second wedge-shaped portion, and
wherein, optionally, the first wedge-shaped portion of the first transceiver-based sensor is positioned between the first wedge-shaped portion and the second wedge-shaped portion of the second transceiver-based sensor.

10. The apparatus of any of claims 1 to 9, wherein the first transceiver-based sensor, the second transceiver-based sensor, the third transceiver-based sensor, and the fourth transceiver-based sensor respectively comprise a first ultrasonic sensor, a second ultrasonic sensor, a third ultrasonic sensor, and a fourth ultrasonic sensor.

11. The apparatus of any of claims 1 to 10, further comprising:
a computing system communicatively coupled to the first transceiver-based sensor, the second transceiver-based sensor, the third transceiver-based sensor, and the fourth transceiver-based sensor, the computing system configured to:
control an operation of the first transceiver-based sensor or the second transceiver-based sensor such that the first transceiver-based sensor or the second transceiver-based sensor emits the first sensor signal or the second sensor signal directed at the third transceiver-based sensor and the fourth transceiver-based sensor;
control an operation of the third transceiver-based sensor or the fourth transceiver-based sensor such that the third transceiver-based sensor or the fourth transceiver-based sensor emits the third sensor signal or the fourth sensor signal directed at the first transceiver-based sensor and the second transceiver-based sensor; and
determine first and second values of a flow parameter of the fluid based on a time-of-flight of the first sensor signal or the second sensor signal and a time-of-flight of the third sensor signal or the fourth sensor signal.

12. A apparatus for monitoring fluid flow, the apparatus comprising:
a fluid conduit defining a flow passage through which a fluid flows;
an upstream sensor assembly associated with the flow passage, the upstream sensor assembly including a first transceiver-based sensor and a second transceiver-based sensor that are concentric with each other; and
a downstream sensor assembly associated with the flow passage and positioned downstream of the upstream sensor assembly relative to a direction of flow of the fluid through the flow passage, the downstream sensor assembly including a third transceiver-based sensor and a fourth transceiver-based sensor that are concentric with each other.

13. The apparatus of claim 12, wherein:
one of the first transceiver-based sensor or the second transceiver-based sensor surrounds the other of the first transceiver-based sensor or the second transceiver-based sensor, and
one of the third transceiver-based sensor or the fourth transceiver-based sensor surrounds the other of the third transceiver-based sensor or the fourth transceiver-based sensor.

14. The apparatus of claim 12 or 13, wherein the first transceiver-based sensor, the second transceiver-based sensor, the third transceiver-based sensor, and the fourth transceiver-based sensor respectively comprise a first ultrasonic sensor, a second ultrasonic sensor, a third ultrasonic sensor, and a fourth ultrasonic sensor.

15. A apparatus for monitoring fuel flow associated with a gas turbine engine, the apparatus comprising:
a fuel conduit defining a flow passage through which a fuel flows;
an upstream sensor assembly positioned within the flow passage, the upstream sensor assembly including a first ultrasonic sensor and a second ultrasonic sensor; and
a downstream sensor assembly positioned within the flow passage downstream of the upstream sensor assembly relative to a direction of flow of the fuel through the fuel passage, the downstream sensor assembly including a third ultrasonic sensor and a fourth ultrasonic sensor,
wherein the first ultrasonic sensor and the second ultrasonic sensor are oriented relative to the third ultrasonic sensor and the fourth ultrasonic sensor such that the third ultrasonic sensor and the fourth ultrasonic sensor receive a first ultrasonic signal emitted by the first ultrasonic sensor and a second ultrasonic signal emitted by the second ultrasonic sensor.
